# EUROPÄISCHE PATENTSCHRIFT

(11) **EP 0 478 535 B1**
(45) Veröffentlichungstag und Bekanntmachung des Hinweises auf die Patenterteilung: **27.11.1996**
(21) Anmeldenummer: 91890226.3
(22) Anmeldetag: 24.09.1991
(51) Int. Cl.: B65H 27/00, D21F 1/40, B30B 3/00

(54) **Kunststoffbeschichtetes Werkstück, z.b. Walze, Druckkissen usw. mit örtlich begrenzter Bindung und Verfahren zu dessen Herstellung**
Polymer coated object, eg roller, pressure cushion etc, with locally limited adhesion and procedure for its manufacture
Objet avec une couche en polymère, p.e. rouleau, coussin à pression, avec adhésion locale limitée et procédé pour sa fabrication

(30) Priorität: 24.09.1990 AT 1929/90
(43) Veröffentlichungstag der Anmeldung: 01.04.1992
(73) Patentinhaber: Ickinger, Georg, Dipl.-Ing.- Dr.techn., A-8010 Graz (AT)
(72) Erfinder: Ickinger, Georg, Dipl.-Ing.- Dr.techn., A-8010 Graz (AT)

(56) Entgegenhaltungen:
- EP-A- 0 157 062
- EP-A- 0 253 981
- FR-A- 2 413 215
- GB-A- 904 021
- GB-A- 939 351
- NL-A- 6 716 264
- US-A- 3 098 284
- US-A- 3 535 760
- US-A- 4 917 013

## Beschreibung

Die Erfindung betrifft ein Verfahren zur Herstellung eines mit Kunststoff, insbesondere mit Elastomer, an mindestens einer Fläche beschichteten Werkstückes, beispielsweise einer Walze, Druckkissen, Anpreßschuh, Heiz-Kühlmatte, geschmiertes Lagersegment - im weiteren Werkstück genannt. Die Erfindung betrifft weiters ein nach diesem Verfahren hergestelltes Werkstück.

Verfahren zur **mindestens einmal durchgeführten** Beschichtung einer Werkstückoberfläche mit Kunststoff bei weitestgehend gleichmäßiger Bindung an diese Oberfläche sind in zahlreichen Varianten bekannt und zum Teil seit Jahrzehnten in Industrie und Gewerbe eingeführt. Eine gleichmäßige Bindung der Kunststoffschicht an die Werkstückoberfläche ist in den meisten Anwendungsfällen erwünscht und zweckmäßig.

Allerdings gibt es bestimmte Anwendungsfälle, in denen eine gleichmäßige Bindung der Beschichtung an die Werkstückoberfläche nicht vorteilhaft, sondern nachteilig ist. Beispielsweise werden in der Papierindustrie Walzen häufig nicht nur zum Weiterbewegen von Siebbändern, sondern auch zur Aussrichtung bzw. Glättung der Siebbänder verwendet. Die Mantelflächen dieser Walzen sind aus diesem Grunde mit entsprechenden Profilen versehen und mit Kunststoff, der gleichmäßig an die Werkstückoberfläche gebunden ist, beschichtet. Die Herstellung derartiger beschichteter Walzen mit Profilen an den Mantelflächen ist ziemlich aufwendig und erfordert eine kostenintensive Fertigung sowie zusätzliche Hilfsvorrichtungen.
Weiters sind Anwendungsfälle von Druckkissen, Anpreßschuhen und Druckplatten bei Druckpressen, Druckgußmaschinen und Refinern mittels Hydraulikzylindern und Führungsmechanismen bekannt, die bei kurzen Verstellwegen großen Reaktionskräften entgegenwirken. Die Herstellung dieser Mechanismen ist aufwendig und kostspielig.

Hier Abhilfe zu schaffen, ist ein Ziel der Erfindung. Die Erfindung ist vornehmlich dadurch gekennzeichnet, daß die Kunststoff-, insbesondere Elastomerschicht, örtlich begrenzt ohne Bindung mit der Werkstückoberfläche hergestellt und zweckmäßig dort von der abgehoben wird.

Dadurch, daß die Kunststoffbeschichtung Bereiche aufweist, in denen keine bzw. im wesentlichen keine Bindung an die Werkstückoberfläche besteht, sind an der Mantelfläche der Walze Bereiche mit unterschiedlichem Reibungswiderstand bzw. unterschiedlicher Durchmesser beispielsweise für ein Siebband, vorhanden. Gerade dieser unterschiedliche Reibungswiderstand bzw. unterschiedliche Durchmesser an der Mantelfläche der Walze, der gegebenenfalls noch gezielt gesteuert wird, kann für die Ausrichtung bzw. Glättung beispielsweise von Siebbändern ausgenützt werden. Entsprechend der Druckdifferenz zwischen Eintritt und Austritt wird der entstehende Hohlraum von unterschiedlicher Größe entstehen und dies wiederum führt zu entsprechendem Durchfluß von Medium, bzw. führt zu unterschiedlicher Austrittsmenge, wenn die Hohlräume durch kleine Öffnungen mit der Oberfläche verbunden sind, dies wird vorteilhaft bei geschmierten Lager bzw bei Anpreßschuhen bzw. Streich- und Befeuchtungswalzen genutzt.

Auch bei Heiz- und Kühlplatten oder Walzen führt die Mediumsnähe zur Oberfläche und die Regelbarkeit der Durchflußmenge zu Anwendungen in Papier-, Kunststoff- ,Zellstoff, Druck- und Textilmaschinenbau. Entsprechend der Druckdifferenz kann in mindestens einem Bereich der miteinander verbunden Hohlräume und im Falle des Gegendruckes durch die Oberfläche berührende Körper, wie beispielsweise Druckplatte, Gegenwalze, Siebtuch, entsprechende Druck- und Reaktionskraft ausgeübt werden. Diese Wirkung wird vorteilhaft bei Druckkissen, Anpreßplatten, Preßwalzen genutzt.

Die Erfindung hat sich zur Aufgabe gestellt, die Hohlraumgestaltung, bzw. Profilgestaltung, bzw. die variantenreiche Wärmeübergangsberührung durch die Erhebungen an der Beschichtungsoberfläche einfach und kostengünstig durch einfaches Einlegen von Bändern bzw. vorgeformten Einlagen bzw. eine Folien od.dgl. bzw. ein Anstrich bzw. Lackschicht od.dgl. - im weitern Schicht zur Verminderung der Haftung genannt - auf die Werkstückoberfläche leicht wiederholbar und auch mehrlagig zu ermöglichen.

### Verfahren zur Herstellung:

Zweckmäßig wird erfindungsgemäß eine Schicht zur Verminderung der Haftung auf die Werkstückoberfläche aufgebracht bzw. ein Band bzw. vorgeformte Einlage oder Folie zweckmäßig teilweise, insbesondere an den Rändern aufgeklebt oder die Werkstückoberfläche zwecks Reduktion der Haftung der Kunststoffschicht örtlich begrenzt geglättet, anschließend mindestens die Kunststoff-, vorteilhaft Elastomerschicht - im weiteren Beschichtung genannt - auf die Werkstückoberfläche aufgebracht und wird hierauf gasförmiges Medium, insbesondere Luft, und bzw. oder flüssiges Medium - im weiteren Medium genannt - zwischen Werkstückoberfläche und Schicht zur Verminderung der Haftung, um die Kunststoffschicht von der Werkstückoberfläche abzuheben und mindestens einen Hohlraum bzw. eine Kammer unter der Beschichtung an der Werkstückoberfläche auszubilden - im weiteren ungebundene Schicht genannt.

Vorteilhaft wird erfindungsgemäß Medium aus einem Innenraum des Werkstückes in die ungebundenen Schicht zugeführt bzw. durchgeleitet, um ungebundene Schicht abzuheben und mindestens einen Hohlraum auszubilden.

Dieser Holraum wird dadurch erzielt, indem durch Erhitzen der Schicht zur Verminderung der Haftung durch Mikrowelle, und/oder durch Widerstandsheizung mittels Stromdurchleitung und/oder mittels chemischer Ausschwemmung bzw. elektrolytischer Auflösung durchgeführt wird und eine Haftminderung bzw. Volumsabnahme erzielt wird und der Kunststoff von der Schicht zur Verminderung der Haftung abgehoben wird.

Zweckmäßig werden erfindungsgemäß die Abmessungen des mindestens einen Hohlraumes bzw. der Kammer im wesentlichen durch die Abmessungen der Schicht zur Verminderung der Haftung bestimmt.

Vor dem Beschichtungsvorgang wird das bzw. Jedes Band im Randbereich umgebogen, um bessere Haftungseigenschaften, gegebenenfalls unter Verwendung von geeigneten Hilfsmitteln, zu erreichen. Zweckmäßig wird das aufgebrachte ein Band im Randbereich umgebogen, wodurch das Band im Randbereich nicht auf der zu beschichtenden Werkstückoberfläche aufliegt, so daß beim anschließenden Aufbringen der Beschichtung auf die Werkstückoberfläche auch weitestgehend vollständig zwischen Randbereich des Bandes und der Werkstückoberfläche aufgebracht wird.

Zweckmäßig wird erfindungsgemäß zur Verbesserung der Haftung der Beschichtung auf der Werkstückoberfläche in der Nähe der Schicht zur Verminderung der Haftung an der zu beschichtenden Werkstückoberfläche mindestens ein Drahtstück, eine Leiste, ein Profil od.dgl. angebracht bzw. an der Werkstückoberfläche, um eine formschlüssige Verbindung mit der Beschichtung herzustellen.

Gemäß einer anderen vorteilhaften Ausgestaltung der Erfindung wird mindestens ein schlauchförmiger Hohlkörper, z.B. durch eine **rohrförmige** Schraubverbindung und bzw. oder chemisch fest mit der zu beschichtenden Werkstückoberfläche verbunden, so daß beim anschließenden Aufbringen der Beschichtung, auf die Werkstückoberfläche die Beschichtung weitestgehend, zweckmäßig vollständig zwischen Werkstückoberfläche und dem mindestens einen schlauchförmigen Hohlkörper sowie auf diesem aufgebracht wird.

Vorteilhaft ist erfindungsgemäß die Ausbildung der Folie bzw. des Einlageteiles als doppelwandiges, an den Konturen verbundene, beispielsweise geklebt, geschweißter,Schicht zur Verminderung der Haftung , der vor der Beschichtung auf die Werkstückoberfläche aufgebracht, beispielsweise geklebt, geschweißt, wird und dann durch Einbringen von Medium die Hohlräume oder Kammern vergrößert werden, um eine **Wulstbildung** bzw. einen Durchfluß beispielsweise für Wärmeübertragung, und/oder durch Aufbauen von Druck zur **Wulstbildung** der Werkstückoberfläche führt.

Vorteilhaft werden mehrere Lagen dieser doppelwandigen Folien bzw. vorgefertigte Einlegeteile zweckmäßig versetzt zueinander verarbeitet, sodaß mehrfache Hohlraumvergrößerung der mindestens zwei Lagen zu einer nahezu gleichmäßigen Druckverteilung, bzw zu einer nahezu gleichmäßigen Verdickung der Beschichtung führt.

Sinngemäß werden die einzelnen Lagen getrennt, oder gemeinsam angespeist, sodaß eine unterschiedliche Ausbildung der **Wulstbildung** erreicht wird.

Vorteilhaft werden mehrere Lagen dieser doppelwandigen Folien bzw. vorgefertigte Einlageteile mittels rohrförmigen Zu- bzw Abflüssen an die gegenüberliegende Seite der Werkstückoberfläche, bzw der Beschichtungsoberfläche geführt.

Sinngemäß werden die einzelnen Lagen getrennt, oder gemeinsam angespeist, sodaß eine den Zufluß entsprechende nach Lage und Größe der Öffnung und Anspeisung unterschiedlicher Abflußquerschnitte an der Beschichtungsoberfläche ausgebildet werden.

### Preß-, Regulier-, Breitstreck-, Heiz-, Kühlwalze,

Die vorliegende Erfindung betrifft auch ein mit Kunststoff, insbesondere mit Elastomer an mindestens einer Fläche beschichtetes Werkstück, beispielsweise eine Walze. Derartige Walzen werden zum Beispiel in der Papierindustrie verwendet. Mit diesen Walzen werden hauptsächlich Stoffbahnen weiterbefördert bzw. entwässert. Häufig erfolgt mit diesen Walzen gleichzeitig eine Ausrichtung bzw. Glättung beispielsweise von Siebbändern. Zu diesem Zweck weisen derartige Walzen Profile auf.
Zur besseren Entwässerung bei Papiermaschinen finden zahlreiche Varianten von Herstellverfahren zur Erzielung von tangential umlaufenden Rillen bzw. Erhebungen. Patente CH - A5 631504 (KÜSTERS), DE3612207(VALMET), DE - C2 2725000 (VALMET) betreffen im wesentlichen metallische Materialen und bei hohem Elastizitätsmodul tritt keine Verformung des Walzenkörpers auf. Die Erfindung hat sich zur Aufgabe gestellt durch elastische Materialen und veränderbarer Öffnungen mit kompressiblen Medien, bzw mit abfließende Flüssigkeiten eine Anpassung der Walze an die Siebform (ähnlich einem walkenden Reifen) zu erzeugen und somit längere Kontaktzeit der Pressung und/oder geringere Rückbefeuchtung durch Abheben des Siebes bei Vergrößern der Hohlräume beim Ablauf zu vermeiden und so den Entwässerungsvorgang besser zu gestalten.
Durch ein Rillenförmiges Auftragen von Elastomer wird beim Verfahren nach EP-A2 0100085(DIETL) eine Beschichtung durchgeführt. Eine **Wulstbildung** soll an sich vermieden werden, da die Rillung nur als Bearbeitungvorgang beabsichtigt ist.
Eine Anpressung des Siebes durch einen gekrümmten Schuh nach DE-A1 3306838 (VOITH) gibt eine Kompensation der Walzenkerndurchbiegung.

Beispiele für in der Papierindustrie verwendete Walzen mit Profilen sind Siebleitwalzen, Breitstreckwalzen, breite Nippwalzen und Entwässerungswalzen.
Im US - A 1660538(WHITNEY), DE - C 248750 (KÄMMERER) Patent wird die Breitstreckung mittels gegenläufiger sich profilmäßig abhebender Wendel erzielt.
Bei DE - A1 2728219 gibt ein Einlagegitter als Beschichtung eine Profilierte Oberfläche.

Die Nippwalze nach Patent DE - A1 3612207 (VALMET) erzielt eine Gleichmäßige Spaltweite der Preßwalzen einer der Durchbiegung entgegenwirkende unterschiedliche Stützung durch Anpreßschuhe zwischen Walzenmantel und Walzenkern.
Die Erfindung hat sich zur Aufgabe gestellt, den unterschiedlichen Spalt der durch die Durchbiegung bei Preßwalzen entsteht mittels Anpassung des Durchmessers, der im Vergleich zur Durchbiegung der Preßwalze ein Vielfaches ist, der beschichteten Walze auszugleichen.

Eine Rollenzuführung für Folienerzeugung des Patentes GB 939,351 (IMPERlAL CHEMICAL INDUSTRIES) weist in FIG.: 2 eine Walze mit einem Hohlraum im Walzenmantel und Anspeisung des Hohlraumes mittels Bohrungen im Walzenkern aus. Mittels Innendruck, oder Vakuum im Hohlraumbereich zwischen Walzenkern und Walzenbezug (-beschichtung) wird die Druckverteilung der Folienzuführung auf der Gegenwalze geregelt. Die Abdichtung des Mantels erfolgt mittels Dichtung aus Weichgummi. Die vorliegende Erfindung hat sich zur Augabe gestellt, die Hohlräume zwischen Werkstück und der Beschichtung beim Herstellvorgang der Beschichtung einzuarbeiten. Vorteilhaft sind hiedurch der Entfall der Dichtungen, das getrennte Herstellen des Walzenbezuges auf einem Dorn. Ein weiterer Vorteil der vorliegenden Hohlkammerbeschichtung liegt im homogenen Zuwachs der Beschichtungsdicke bei mehrlagigen Schichten.

Im EPA 87107132.0 der GRAPHA-HOLDING AG ist eine Einrichtung zum Fördern von bahnförmigem Material erwähnt. Ein, an den Seitenwangen des Walzenkernes dicht befestigter, Walzenmantel, alternativ mit ringförmigen Rippen in Abständen unterstützt, sorgt für gleichmäßigen Vorschub pro Umdrehung, unabhängig von der Wandstärke der Bahn.
Der zylindrische Walzenmantel wird unter Druck im Durchmesser vergrößert, wodurch ein Ausgleich der Vorschublänge pro Umdrehung erreicht wird. Bei einer Anpressung im Preßnipp oder bei Umlenkung der Förderbahn weicht dieser elastische vergrößerte unter Druck stehende Zylindermantel auf die freiliegende Seite ausweichen, da dort über die ganze Walzenlänge keine Unterstützung vorliegt. Die Anpreßkraft resultiert hier nur durch das Biegememont des druckführenden Schlauches über die Walzenbreite. Je mehr Druck umso mehr wird sich der Mantelschlauch einer Auslenkung widersetzen. Der Innendruck wird hierbei nicht als Preßkraft im Nipp zur Wirkung kommen, da die Radialspannung des Mantels durch das Ausweichen auf die freie Seite unverändert bleibt.
Ebenfalls ein Zylindermantel, der über die ganze Walzenbreite nicht vom Walzenkern unterstützt wird liegt im Patent FR-A-2 413 215 vor. Auch hier stützt nicht der Innendruck, sondern die Reaktionskraft durch die Auslenkung des elastischen Mantels aus der zentrischen Lage.

Einem ähnlichen Prinzip liegt die Durchmesservergrößerung der axial multipel angeordneten einzelnen zylindrischen Ringe im US Patent US 4,917,013 von SIDNEY KATZ zugrunde. Diese einzeln abgedichteten zylindrischen Ringe stützen den Walzenmantel (der in der Darstellung nicht gezeichnet wird) radial anwachsend. Auch hier wird der Zylindermantel nicht mit gleichmäßigem Druck gegen die Gegenwalze gedrückt, sondern die Reaktionskrft hängt von der Auslenkung gegenüber der zentrischen Lage des Walzenmantels ab. Eine gleichmäßige Anpressung über die Nippbreite wäre rein zufällig.

Bei der vorliegenden Erfindung wird die elastische Beschichtung an den haftenden Stellen am Walzenkern festgehalten. Der Innendruck der Hohlräume führt ohne Gegenpressung zur elastischen Verformung der örtlichenHohlräume bis zum Kraftausgleich. Im Preßnip oder bei der Umlenkung wird durch die Gegenwalze bzw. durch die Bahn die örtliche Spannungabgebaut und Innendruck des Hohlraumes beginnt an den eingedrückten Stellen voll zum Wirken. Wesentlich höhere und vor allem gleichmäßigere Pressung sind der Vorteil der vorliegenden Walze mit Hohlkammerbeschichtung.

Den eben beschriebenen Nachteil der Walze gemäß EPA 87107132.0 bzw. FR-A-2 413 215 und US 4,917,013 gleicht das US Patent US 3,098,284 HORNBOSTEL aus, indem elastische Schläuche wendelförmig über die Walze gewickelt von einem Schutzmantel umgeben werden.

Einen sehr ähnlichen Weg der Lösung zeigt das Patent NL-A-6 716 264 (PAPETERIE DE STENAY). Hierbei werden elastische Schläuche auf Radnaben ringförmig aufgebracht. Einzelne Anspeisung der Radschläuche führt zu Druckausgleich bzw. Druckerhöhung jener Räder, die durch die Durchbiegung im Nip ausgelenkt wurden. Vorgebogene Walzenkerne, auf denen die einzelnen Räder befestigt sind können durch zweckmäßige Verdrehung die Durchbiegung kompensieren.

Ebenfalls zur "weichen Unterstützung" führt EPA 84630127.3 von BELOIT COOPERATION. Einzelne, in felgenförmigen Einspannungen gehaltenen axial multipel angeordneten Zylindermäntel werden zum Ausgleich der gewünschten breiten Stützwirkung bei Wickeldornen bzw Tragwalzen von Rollen herangezogen. Eigene einzelne Anspeisung der multiplen Einzelrollen können Durchbiegungen bzw. unterschiedliche Tragwirkung erzielen.

Die vorliegende Erfindung unterscheidet sich gegenüber der oben erwähnten Erfindungen US 3,098,284, NL-A-6 716 264, EPA 84630127.3 durch das Herstellverfahren. Einerseits Bildung der Hohlräume durch Schichten mit Verrninderter Haftung - anderseits durch Wicklung eines Schauches auf den Kern, multiple Anordnung von "Einzelrädern".

Die freie Gestaltungsmöglichkeit der Form der Schichten zur Verminderung der Haftung, die mehrlagige Beschichtung und die mehrgängige Wendelung mit großem Steigungswinkel sind Anwendungsfälle die durch US 3,098,284, NL-A-6 716 264,US 3,098,284 nicht gelöst werden. Eine Abgrenzung der vorliegenden Erfindung gegenüber **schraubenförmiger Ausbildung** von Hohlräumen mit kleinstem Steigungswinkel erfolgt im Anspruch 12 durch die Einschränkung der Form "der Schicht zur Verminderung der Haftung auf **Schraubung** mit Steigungswinkel größer 5 Grad".

Jeweils Unterstützung eines umlaufenden Mantels durch Druckausgleich und Anpressung dieses Mantels seitens eines feststehenden Walzenkernes zeigen die Patente GB-A-904 021 (KÜSTERS) mittels aufblasbarer Blase und US-A-3,535,760 JAMES mittels hydraulisch verstellbarern Joch.

Preßwalzen die gemäß der homogenen elastischen Beschichtung der vorliegende Erfindung nutzen unterliegen ebenfalls einer Durchbiegung aus dem Anpreßdruck im Nip. Der große Bereich der elastischen Pressung des vorliegenden "weichen Walzenbezugs" führt zu vernachlässigbaren Unterschieden der Preßkraft, die aus den hiezu vergleichbaren kleinsten Durchbiegungen der Walze über die Breite resultieren.

Siebleitwalzen werden zur Ausrichtung des Siebbandes in Achsrichtung quer zur Drehrichtung verwendet, wobei noch ein Siebregler zur Betätigung der Auslenkung erforderlich ist.

Breitstreckwalzen weisen zumeist spiralförmige Erhebungen auf und dienen zur Glättung bzw. zur Auswärtsstreckung des Siebbandes in Achsenrichtung.

Breite Nippwalzen weisen eine weiche Elastomerbeschichtung auf und haben den Nachteil, daß nicht entsprechende Drücke aufgebracht werden können. Zusätzliche Elastomerbandführungen dienen dazu, das elastische Band nicht fest mit dem Körper zu verbinden und somit größere Preßwirkungen ohne Haftungsverlust der Beschichtung durchführen zu können.

Auch die bisher bekannten Entwässerungswalzen weisen Erhebungen auf, zwischen denen die Flüssigkeit abfließen kann, so daß eine Rückbefeuchtung z.B. einer Stoffbahn vermieden wird.

Die Herstellung solcher Walzen ist verhältnismäßig teuer. Außerdem sind die Profile nicht bzw. kaum von der Walze unabhängig beweglich und nicht in der Größe veränderbar, wodurch zusätzliche Hilfsvorrichtungen erforderlich sind.

Hier Abhilfe zu schaffen, ist ein Ziel der Erfindung. Das Werkstück ist vornehmlich dadurch gekennzeichnet, daß an der Werkstückoberfläche, beispielsweise Mantelfläche einer Walze, mindestens ein örtlich begrenzte Schicht zur Verminderung der Haftung angeordnet ist, dessen Bereich eine Zu- bzw. Ableitung für gasförmige oder flüssiges Medium insbesondere Luft, aufweisen kann.

Durch die vorstehend beschriebene Ausgestaltung der Erfindung ist es möglich, auf der Mantelfläche einer Walze Bereiche mit unterschiedlichem Reibungswiderstand zu schaffen. Auf diese Weise kann - bei entsprechender Anordnung dieser Bereiche - eine Ausrichtung bzw. Glättung, beispielsweis von Siebbändern erfolgen.

Zweckmäßig ist erfindungsgemäß der mindestens ein örtlich begrenzte Schicht zur Verminderung der Haftung ein in Beschichtung, und bzw. oder zwischen der Werkstückoberfläche und Beschichtung angeordnetem Hohlraum bzw.

Kammer, der vorteilhaft mit einer Zu- bzw. Ableitung für Medium in Verbindung steht.
Dadurch ist es möglich, den Durchmesser einer Walze durch Zuführung bzw. Ableitung von Medium in den bzw. aus dem mindestens einen auf der Mantelfläche einer Walze angeordnetem Hohlraum zu verändern und dadurch an die jeweilige Betriebsart anzupassen.

Zweckmäßig weist erfindungsgemäß das Werkstück ein Hohlraum- bzw. Kammersystem auf, das aus mindestens einem in der Beschichtung der Werkstückoberfläche und der Beschichtung angeordnetem Hohlraum bzw. Kammer sowie aus einem jeden Hohlraum bzw. Kammer zugeordneten Kanal besteht, durch den dem mindestens einen Hohlraum bzw. Kammer, gegebenenfalls voneinander unabhängiges Medium, insbesondere mit variablem Druck, zuführbar bzw. ableitbar ist.

Gemäß einer vorteilhaften Ausgestaltung der Erfindung ist der mindestens eine Hohlraum bzw. die Kammer aus einer Schicht zur Verminderung der Haftung gebildet, das bzw. die im Randbereich nach innen gebogen und an die unbeschichteten Werkstückoberfläche geklebt ist.

Vorteilhaft ist erfindungsgemäß der mindestens eine Hohlraum bzw. die Kammer in einer Vertiefung der Werkstückoberfläche angeordnet und ist gegebenenfalls eine Begrenzungsfläche des mindestens einen Hohlraum bzw. der Kammer konform mit der Werkstückoberfläche.

Ab einer bestimmten Hohlraumgröße ist es zweckmäßig, den Hohlraum durch Wände in Hohlraumzonen zu teilen, denen bzw. aus denen ein Medium, voneinander unabhängig zuführbar bzw. ableitbar ist. Dadurch ist auch mit größeren Hohlräumen, bei solchen, die sich über nahezu die gesamte Breite der Mantelfläche erstrecken, eine gezielte **Wulstbildung** der Mantelfläche einer Walze erreichbar. Zweckmäßig ist erfindungsgemäß der mindestens eine Hohlraum bzw. die Kammer in mindestens zwei Hohlraum bzw. Kammerzonen geteilt und jede Hohlraum- bzw. Kammerzone durch einen zugeordneten Kanal, gegebenenfalls voneinander unabhängiges Medium, insbesondere mit variablem Druck, zuführbar bzw. ableitbar.
Zweckmäßig ist erfindungsgemäß der mindestens eine Hohlraum bzw. die Kammer, gegebenenfalls jede Hohlkraum, bzw. Kammerzone durch einen zugeordneten, zweckmäßig im Werkstück angeordneten, Kanal mit einem Innenraum des Werkstückes verbunden, durch den zugeordneten Kanal Medium, insbesondere mit variablem Druck, aus dem Innenraum dem mindestens einen Hohlraum bzw. Kammer, gegebenenfalls den Hohlraum- bzw. Kammerzonen, z.B. voneinander unabhängig, zuführbar bzw. von dem mindestens eine Hohlraum bzw. die Kammer, gegebenenfalls von jeder Hohlraum- bzw. Kammerzone, z.B. voneinander unabhängig in den Innenraum ableitbar.

Vorteilhaft ist der mindestens eine Hohlraum bzw. Kammer in axialer Richtung, gegebenenfalls vorteilhaft parallel zueinander über die Werkstückoberfläche, angeordnet.

Gemäß einer anderen vorteilhaftenAusgestaltung der Erfindung ist der mindestens eine Hohlraum bzw. die Kammer **schrauben**förmig, ein-, zwei-, oder mehrgängig, über die Werkstückoberfläche angeordnet. Eine derartige **Wulstbildung** dient zur Glättung bzw. Auseinanderstreckung des Siebbandes in Achsrichtung.

Vorteilhaft ist erfindungsgemäß der mindestens eine Hohlraum bzw. die Kammer in beliebiger Richtung, bei mehreren Hohlräumen bzw. Kammern vorteilhaften über die Werkstückoberfläche verteilt angeordnet.

Zweckmäßig sind erfindungsgemäß die Hohlräume bzw. Kammern gleichartig, insbesondere schlauchartig ausgebildet.

Vorteilhaft ist erfindungsgemäß in Abhängigkeit von der zugeführten bzw. durchgeleiteten Menge an Medium, zweckmäßig aus dem Innenraum des Werkstückes in den mindestens eine Hohlraum bzw. die Kammer, gegebenenfalls in die Hohlraum- bzw. Kammerzonen, z.B. voneinander unabhängig mindestens ein **Wulst** mit variabler Größe auf der Werkstückoberfläche ausbildbar, und durch Ableitung von Medium, aus dem mindestens eine Hohlraum bzw. die Kammer, gegebenenfalls aus den Hohlraum- bzw. Kammerzonen, z.B. voneinander unabhängig, zweckmäßig in den Innenraum des Werkstückes d**er** mindestens eine **Wulst** entfernbar.

Zweckmäßig ist erfindungsgemäß das Werkstück als Walze ausgebildet und von außen an einer, vorteilhaft an beiden Stirnseiten in der Rotationsachse der Walze, zweckmäßig über einen an der bzw. jeder Stirnseite angeordneten Drehteil Medium, insbesondere mit variablem Druck durch den Innenraum der Walze und durch eine in der Rotationsachse der Walze angeordneten Bohrung sowie mindestens einen im Innenraum der Walze zweckmäßig vertikal zur Rotationsachse angeordneten Zapfen dem mindestens einen Hohlraum bzw. Kammer, gegebenenfalls jeder Hohlraum- bzw. Kammerzone zugeordneten, in der Walze angeordneten Kanal, z.B. voneinander unabhängig dem mindestens eine Hohlraum bzw. die Kammer, gegebenenfalls den Hohlraum- bzw. Kammerzonen zuführbar bzw. aus dem mindestens einen Hohlraum bzw. der Kammer, gegebenenfalls aus den den Hohlraum- bzw. Kammerzonen z.B. voneinander unabhängig nach außen ableitbar.

Gemäß einer weiteren vorteilhaften Ausgestaltung der Erfindung ist das Werkstück als Walze ausgebildet, und der Innenraum der Walze durch mindestens eine, vorteilhafte vertikal zur Rotatisonachse der Walze angeordneten Trennwand in mindestens zwei Innenräume geteilt, und von außen an beiden Stirnseiten über einen jeweils in der Rotationsachse der Walze angeordneten Drehteil gasförmiges Medium, insbesondere Luft, und bzw. oder flüssiges Medium, insbesondere mit variablem Druck mittels einer in der Rotationsachse der Walze angeordneten Bohrung durch den zugeordneten Innenraum dem mindestens eine Hohlraum bzw. die Kammer, gegebenenfalls den Hohlraum- bzw. Kammerzonen durch den zugeordneten Kanal, z.B. voneinander unabhängig zuführbar bzw. aus dem mindestens eine Hohlraum bzw. die Kammer, gegebenenfalls aus den Hohlraum- bzw. Kammerzonen z.B. voneinander unabhängig nach außen ableitbar.

Zweckmäßig ist die Schicht zur Verminderung der Haftung ein Überzug bzw. eine örtliche Gestaltung, z.B. Glättung auf der Werkstückoberfläche, bzw. der Beschichtung keine bzw. im wesentlichen keine Bindung eingeht bzw. hat.

### Druckkissen und Preßschuh:

Wird einer **Wulstbildung,** bzw Ausformung der Hohlräume, bzw. Kammern durch Anbringen von starren Körpern an der Beschichtungsoberfläche wie beispielsweise ein Druckstempel, Formkörper, Auflageplatte, entgegengewirkt, wird bei Zuführung von Medium Druck aufgebaut, der zweckmäßig auf Konstruktionselemente übertragen wird, bzw. zur Verstellung der Lage großer Lasten, bzw Verstellung der Lage unter großer Reaktionskraft herangezogen wird. Im Falle des ebenen Werkstücks beispielsweise als Druckstempel, Anpreßplatte oder Formkörper, im Falle des gekrümmten Werkstückes als Preßschuh, Auflaufkeil oder Schmiegeplatte.

### Streichwalze, Schmierschuh, Befeuchtungsplatte:

Vorteilhaft für die Verteilung von Flüssigkeiten werden die Hohlräume mit rohrförmigen Einlageteilen, bzw. mit doppelwandigen Folien, bzw mittels Haftverminderer, mit der Beschichtungsoberfläche verbunden, sodaß der anliegende Druck des Mediums im Hohlraum, bzw Kammernsystem zum Austritt des Mediums an der Werkstückoberfläche führt.
Streichwalzen in der Papierindustrie, Kunststoffindustrie Druckmaschinen sind Anwendungsbereiche für diese Werkstücke.

### Beschreibung der Abbildungen:

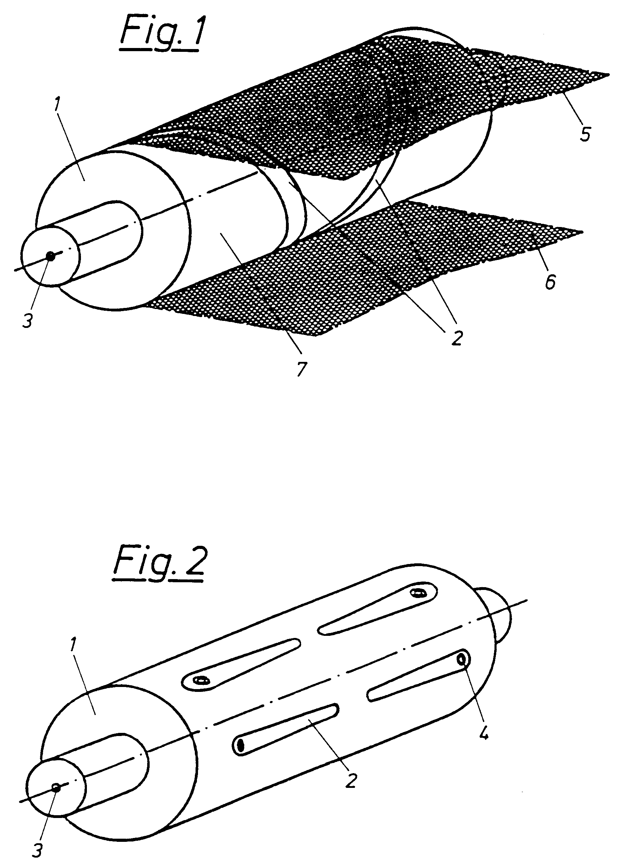

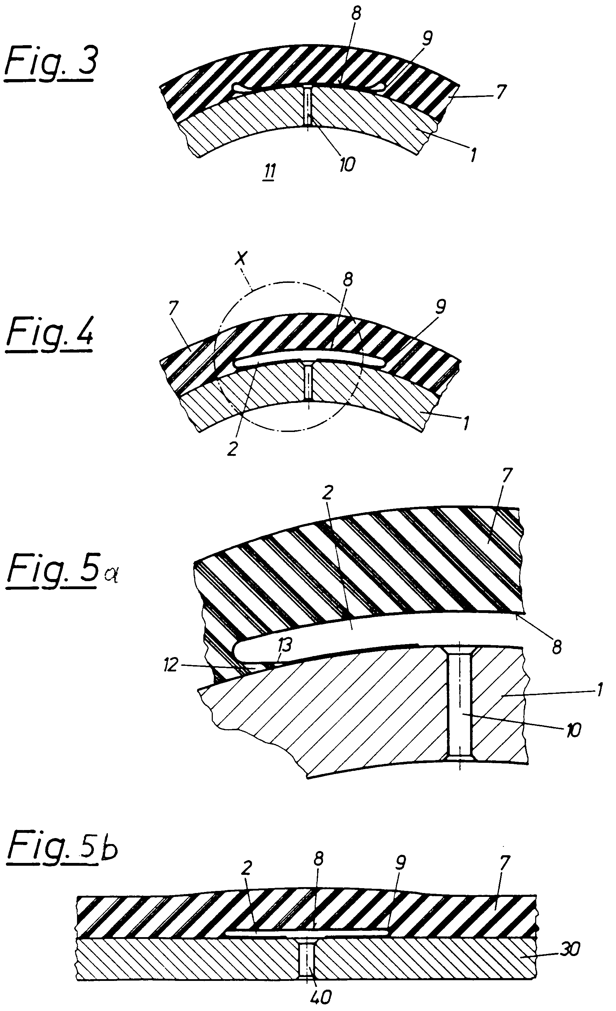

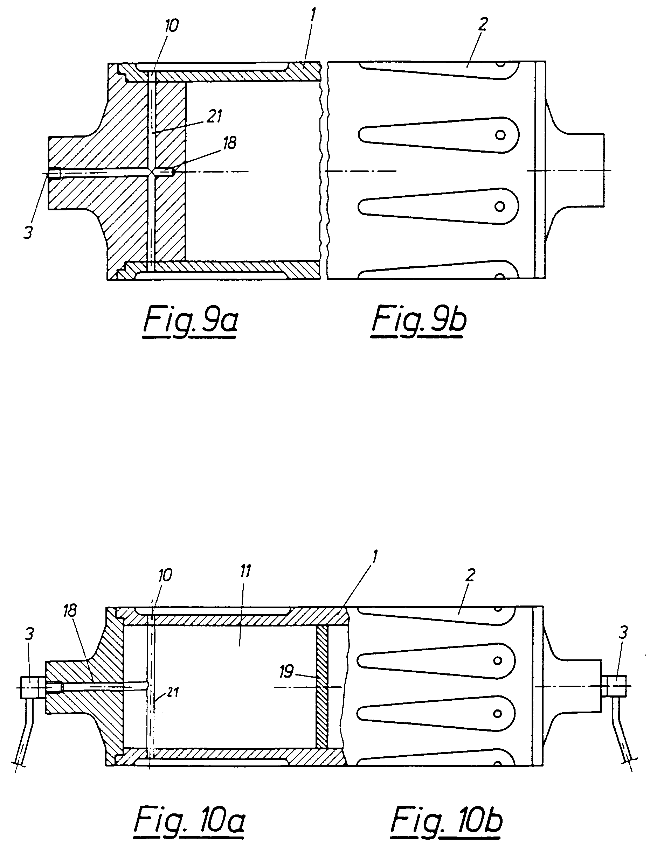

Die Erfindung wird an Hand der beiliegenden Zeichnungen beispielsweise erläutert. Es zeigen die Fig. 1, 2 und 6 perspektifische Ansichten der erfindungsgemäßen Walze, die Fig. 3, 4, 5, 7 und 8 einen vertikalen Schnitt eines Teiles der Walze im Bereich der Lauffläche, die Fig. 9a ist ein vertikaler Schnitt einer Walzenhälfte, die Fig. 9b eine Draufsicht auf die beschichtete, mit Kammern ausgestattete, Mantelfläche der anderen Walzenhälfte und die Fig. 10a ist ein vertikaler Schnitt einer erfindungsgemäßen Walzenhälfte und Fig. 10b eine Draufsicht auf die beschichtete, mit Kammern ausgestattete, Mantelfläche der anderen Walzenhälfte. In den Fig. 1 bis 10 ist mit 1 der Walzenkörper bezeichnet.
Es zeigen die Figuren 10 bis 13 Querschnitte von ebenen beschichteten Werkstücken, die Figur 11 zeigt die Anwendung der mehrlagigen Kammersysteme an einem Druckkissen. Die Figur 12 stellt das Werkstück als Beschichtungs-, platte, -walze mit bis an die Oberfläche geführtem Kammersystem. Die Figur 13 stellt eine Druckplatte mit Ausbildung des Hohlkörpers als, mit der Werkstückoberfläche verbundenen schlauchartigen Kammer.

In Fig. 1 ist eine Siebleitwalze gemäß der Erfindung dargestellt. Mit 2 sind die wendelförmigen Kammern, mit 3 die Anspeisung der Walze mit Medium, mit 7 die Elastomerbeschichtung, mit 6 der Siebzulauf und mit 5 der Siebablauf bezeichnet. Die Kammer 2 sind im mit Medium weitestgehend aufgefüllten Zustand dargestellt und umschlingend wendelförmig, jeweils von innen nach außen in entgegengesetzter Richtung den Walzenkörper 1.
Je nach Aufdrehungszustand wird die Wendel stärker oder schwächer ausgeführt, was für beidseitige weitestgehend vollständige Befüllung mit Medium, Breitstreckwirkung und einseitige weitestgehende vollständige Befüllung mit Medium genutzt wird. Das Sieb wird in Richtung des größeren Walzendurchmessers vorgefördert, so daß durch Zuführung bzw. Ableitung von Medium eine gesteuerte Regulierung erzielt wird, wodurch die bisher benötigte Verstelleinrichtung nicht mehr erforderlich ist. Bei dieser pneumatisch gesteuerten Umfangsveränderung der Walze ist ein Direktanschluß an die Pneumatikventile der Anschlagfühler möglich.

In Fig. 2 sind in axialer Richtung auf der Mantelfläche der Walze angeordnete Kammern vor dem Beschichtungsvorgang dargestellt. Mit 2 sind die Kammern, mit 3 die Anspeisung der Walze mit Medium, mit 4 die zur Kammer 2 führenden Zufuhröffnung bezeichnet.

In der Fig. 3 ist eine nach der Elastomerbeschichtung auf der Lauffläche der Walze angeordnete Kammer dargestellt, die nur zum Teil mit Medium aufgefüllt ist. Mit 10 ist ein im Walzenkörper 1 angeordneter Kanal, mit 8 ein auf dem Walzenkörper 1 aufgebrachtes ein Band bzw. vorgeformte Einlage , das im Randbereich umgebogen ist, mit 9 der Randbereich des Bandes, mit 7 die Elastomerschicht und mit 11 der Innenraum der Walze bezeichnet. Medium wird aus dem Innenraum 11 der Walze durch den Kanal 10 dem im Randbereich 9 umgebogenen Band 8, um die Kammer 2, wie nachfolgend in Fig. 4 dargestellt, weitestgehend vollständig mit Medium zu befüllen.

Wie schon vorstehend erwähnt ist in Fig. 4 die, auf der mit Elastomer beschichtete Mantelfläche der Walze angeordnete Folie, die durch Befüllen mit Medium von der beschichteten und/oder unbeschichteten Werkstückoberfläche abgehoben wird und die Kammer 2 bildet, dargestellt. Mit 8 ist die im Randbereich 9 umgebogene Folie, mit 7 die auf die beschichteten und/oder unbeschichteten Werkstückoberfläche aufgebrachte Elastomerschicht bezeichnet. Um die Haftung der Folie 8 zu verbessern, ist der Randbereich 9 der Folie 8 umgebogen, so daß ein Unterwandern des Beschichtungsmaterials 7 bis zur Berührstelle des Klebebandes 8 mit dem Walzenkörper 1 erreicht wird. Dadurch wird die Festigkeit der Verbindung von Walzenkörper 1 und Folie erhöht, weil der aus Elastomerbeschichtung 7 und Walzenkörper 1 gebildete Haftgrund nicht zugbeansprucht wird. Der Innendruck der aus der Folie 8 durch Befüllen der mit Medium gebildeten Kammer 2 wird nur auf die Elastomerbeschichtung übertragen.

Fig. 5a ist eine vergrößerte Darstellung des in Fig. 4 dargestellten Teils "X" der erfindungsgemäßen Walze. Mit 10 ist der im Walzenkörper 1 angeordnete Kanal, mit 2 die auf den Walzenkörper 1 angeordnete Kammer, mit 12 die Elastomerbeschichtung im Randbereich 9 der Kammer 2 und mit 13 der zwischen Walzenkörper 1 und Kammer 2 angeordnete Elastomerkeil der Beschichtung bezeichnet. Aus der Darstellung ist ersichtlich, daß nach Aufbringen der Folie 8 auf dem Walzenkörper 1, die im Randbereich 9 umgebogen wird, eine keilförmige Unterwanderung der Folie 8 stattfindet, im Bereich des Keiles 13 keine Zugkräfte mehr auftreten, so daß der Haftgrund in diesem Bereich nicht übermäßig beansprucht wird und sich löst. Nach der Beschichtung wird eine weitestgehende vollständige Befüllung mit Medium durchgeführt, wobei sich die Folie 8 durch den eingebrachten Mediumsdruck vom Walzenköper 1 löst und die Umlappung des Klebebandes durch den Innendruck aufspringt.
In Fig. 5b ist der ebene Zustand des Werkstückes aus 5a dargestellt.

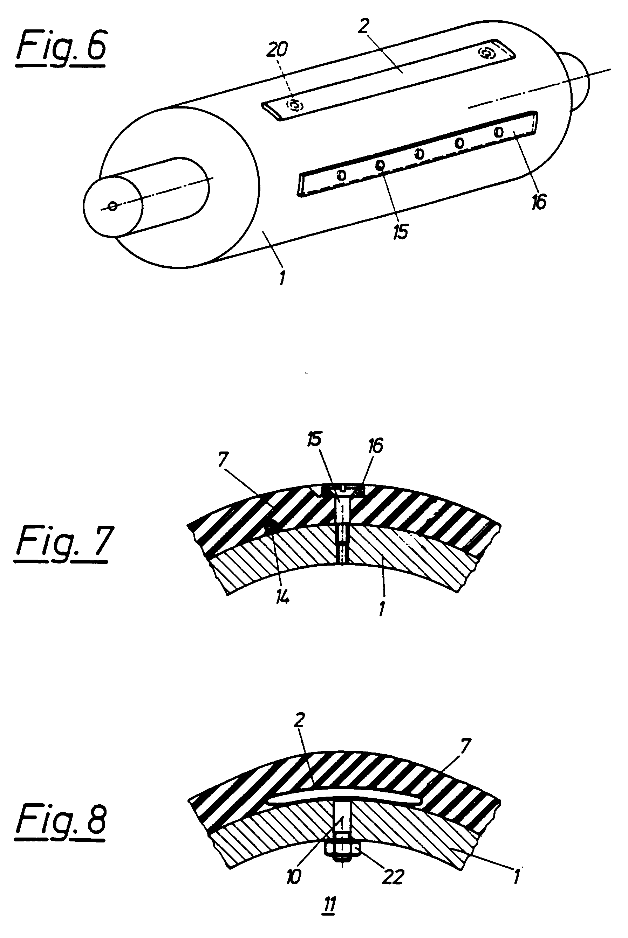

In den Fig. 6 bis 8 sind Varianten zur Verbesserung der Haftung der Beschichtung am Walzenkörper 1 dargestellt.

In Fig. 6 ist mit 2 ein schlauchförmiger, flachgepreßter Formkörper, mit 20 eine Zufuhröffnung, mit 16 eine Leiste und mit 15 eine Schraube bezeichnet. Der schlauchartige Formkörper 2 wird vor der Beschichtung mit Elastomer auf den Walzenkörper 1 aufgeklebt, wobei durch in der Nähe des Formkörpers 2 angeordnete Leisten 16, die äuf dem Walzenkörper 1 angeschweißt oder mittels Schrauben 15 angeschraubt sind, eine mechanische Haftungsverbesserung erreicht wird.

In Fig. 7 ist mit 14 ein auf den Walzenkörper 1 aufgeschweißter Draht, mit 16 eine Leiste und mit 15 eine Schraube bezeichnet. Durch den aufgeschweißten Draht 14 wird eine mechanische Haftungsverbesserung der Elastomerbeschichtung 7 auf dem Walzenkörper 1 erreicht.

In Fig. 8 ist die Medienführung bzw. -ableitung zum bzw. aus dem schlauchartigen Formkörper 2 durch einen im Walzenkörper 1 angeordneten Kanal 10 dargestellt, der eine vom Innenraum 11 der Walze zugängliche **rohrförmige** Verschraubung 22 aufweist.

**Die** Fig. 9 **und 10 stellt einen Walzenkörper ohne Beschichtung dar, wobei die Figur a den Schnitt durch die Walze darstellt und die Schicht zur Verminderung der Haftung und somit den örtlich begrenzten Bereich der Abhebung, der später erfolgenden Beschichtung, zur Verdeutlichung räumlich und sichtbar, das Rohr umhüllend, dargestellt ist. Die Figur b stellt die Draufsicht dar. In Fig 9** ist eine Medienzuführung bzw. Ableitung an den beiden Stirnseiten der Walze dargestellt. Mit 18 ist die in der Rotationsachse der Walze angeordnete Bohrung, mit 17 der quer zur Roatationsachse der Walze angeordnete Zapfen und mit 10 ein im Walzenkörper 1 angeordneter Kanal bezeichnet. Durch die Bohrung 18, Zapfen 17 und Kanal 10 ist von beiden Stirnseiten der Walze über die Anspeisung 3 eine getrennte Mediumsführung, durch die Walze zur **Hohl-**Kammer, **die sich nach Aufbringung der Beschichtung und der anschließenden Abhebung der Beschichtung (die in dieser Figur nicht dargestellt ist) an den örtlich begrenzten Stellen (2) bildet,** Zu- bzw. Ableitung aus der **Hohl-**Kammer möglich.

Auch durch die in Fig. 10 dargestellte Ausgestaltung der Erfindung ist von beiden Stirnseiten der Walze eine getrennte Mediums**zu**führung bzw. Ableitung durch die Walze zur **Hohl-**Kammer 2 möglich. Im Innenraum 11 der Walze ist vertikal zur Rotationsachse der Walze eine Trennwand 19 vorgesehen, wobei das Medium von der Anspeisung 3 ohne Verwendung eines Zapfens durch eine Bohrung 18, einen Kanal 21 und einen im Walzenkörper angeordneten Kanal 10 zur **Hohl-**Kammer, **die sich nach Aufbringung der Beschichtung und der anschließenden Abhebung der Beschichtung (die in dieser Figur nicht dargestellt ist) an den örtlich begrenzten Stellen (2) bildet, zu- bzw, abgeleitet wird.**

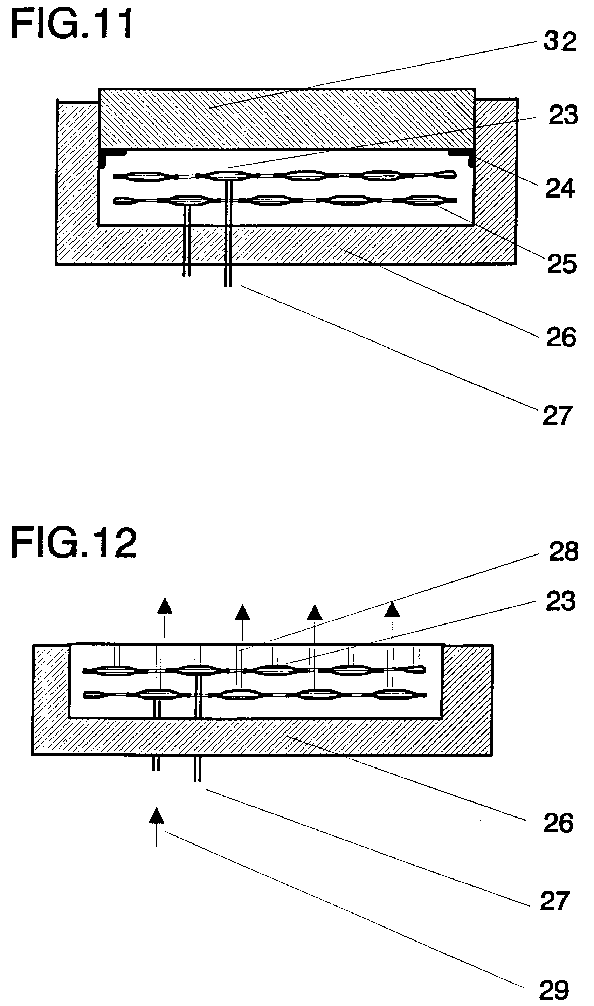

Für das ebene beschichtete Werkstück ist in FIG. 11 die Ausgestaltung der Erfindung als Druckkissen dargestellt. Die Druckplatte 32 wird von der Elastomerschicht 23 getragen. Die Stützleisten 24 schütz das Elastomer bei Bewegung der Druckplatte 32 gegenüber dem Gehäuse 26. Die doppelwandigen Folien 25, die in dieser Figur zweilagig ausgeführt dargestellt sind und an der abgrenzenden Kontur der Hohlraumfläche geschweißt, geklebt gegenüber dem Elastomer die Kammern abgrenzen. Über Rohre, bzw. vorgefertigte Einsatzstücke 27 wird die Zu - bzw Durchleitung des Mediums zugeführt, bzw abgeleitet.
Druckerhöhung in den Zuleitungen bewirkt die Weiterleitung des Drucks, bzw. die Volumszunahme in den Kammern 25 eine Anhebung der Druckplatte 32.

Ein Werkstücke , ist in FIG. 12 ist dargestellt, wie durch eingebrachte Verbindungleitungen 28 gasförmiges, bzw. flüssiges Medium in den Hohlräumen ein- bzw. weitergeleitet 29 und an der Beschichtungsoberfläche abgeführt wird. Bei mehrlagiger Hohlraumausführung wird über ein weiteres Zuführungsrohr 27 beispielsweise andersartiges Medium zugeführt und mit ersterem Medium an der Werkstückoberfläche kombiniert.

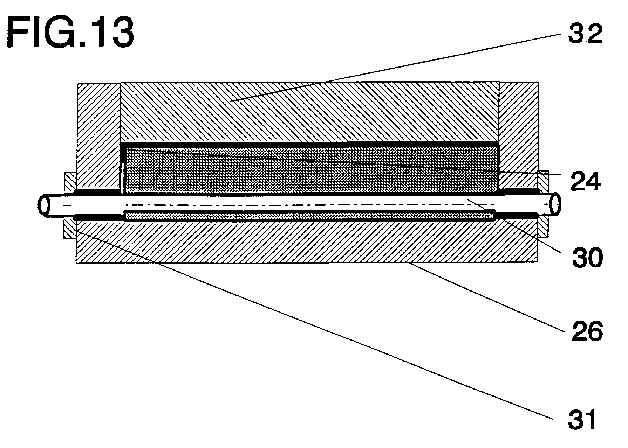

In Figur 13 wird eine Druckplatte 32, die von einem Elastomer 23 gestützt wird in der Form angehoben dargestellt, daß der schlauchförmige Körper 30 mittels Dichtung 31 an der Werkstückoberfläche angeflanscht wird und bei Einleitung von gasförmigen bzw. flüssigem Medium der Druck bzw. die Volumszunahme die Druckplatte 32 gegen Reaktionskräfte stützt bzw. die Druckplatte anhebt.

## Patentansprüche

1. Verfahren zur Herstellung eines Werkstückes **(1)** beispielsweise einer Walze, Druckkissen, Anpreßschuh, Heiz- Kühlmatte, geschmiertes Lagersegment mit einer, mit Kunststoff-, insbesondere Elastomer druckgegossenen, aufgepreßten, oder aufgespritzen Beschichtung **(7),** dadurch gekennzeichnet, daß die Kunststoff-, insbesondere Elastomerschicht **(7)** durch die Anwendung eines Mittels zur Verminderung bzw. Aufhebung der Adhäsionsbildung - weiters Schicht **(8)** zur Verminderung der Haftung genannt - örtlich begrenzt, ohne Bindung mit der Werkstückoberfläche hergestellt wird, wobei dieser Verfahrensschritt zur Ausbildung dieser Kunstoffbeschichtung mindestens einmal durchgeführt wird und zur Bildung von Hohlräumen **(2)**, mit gas- oder flüssigförmigen Medien zwischen Werkstückoberfläche und Innenfläche der Beschichtung mittels Zuführvorrichtung **(3, 10)** beaufschlagt wird und die Kunststoffbeschichtung **(7)** dort von der Werkstückoberfläche zur **Wulstbildung** abgehoben wird.

2. Verfahren zur Herstellung der Schicht zur Verminderung der Haftung nach Anspruch 1 , dadurch gekennzeichnet, daß vor der Beschichtung mindestens ein Band **(8)** bzw. vorgeformte Einlage bzw. eine Folie, ein Anstrich bzw. Läckschicht auf das Werkstück **(1)**, aufgebracht bzw. ein Band **(8)** bzw. vorgeformte Einlage oder Folie zweckmäßig teilweise, insbesonders an den Rändern **(13)** aufgeklebt, bzw. befestigt wird oder die Werkstückoberfläche zwecks Reduktion der Haftung der Kunststoffschicht örtlich begrenzt geglättet wird.

3. Verfahren zur Herstellung der Schicht zur Verminderung der Haftung nach Anspruch 1, dadurch gekennzeichnet, daß vor der Beschichtung mindestens ein Band **(8)** bzw. vorgeformte Einlage bzw. eine Folie ein Anstrich bzw. Lackschicht aus elektrisch leitfähigem Material auf das Werkstück **(1)**, aufgebracht wird und nach der Beschichtung **(7)**, die Haftung durch Widerstandsheizung mittels Stromdurchleitung vermindert wird.

4. Verfahren zur Herstellung der Schicht zur Verminderung der Haftung nach Anspruch 1, dadurch gekennzeichnet, daß vor der Beschichtung **(7)** mindestens ein Band **(8)** bzw. vorgeformte Einlage bzw. eine Folie, ein Anstrich bzw. Lackschicht aus chemisch löslichem Material auf das Werkstück aufgebracht wird und nach der Beschichtung , die Haftung durch Ausschwemmung bzw. elektrolytischer Auflösung aufgehoben wird.

5. Verfahren nach einem der Ansprüche 1 bis 4, dadurch gekennzeichnet, daß das auf das Werkstück **(1)** aufgebrachte selbstklebende Band **(8)** bzw. Folie im Randbereich **(13)** umgebogen wird, wodurch die Folie **(8)** im Randbereich **(13)** nicht auf der Werkstückoberfläche aufliegt **(12)**, und anschließend die Kunststoffschicht **(7)** auf das Werkstück **(1)**, auch unterhalb im nichtaufliegenden Randbereich **(12)** der Folie, auf der Werkstückoberfläche haftend aufgebracht wird.

6. Verfahren nach einem der Ansprüche 1 bis 5, dadurch gekennzeichnet, daß zur Verbesserung der Haftung der Kunststoffbeschichtung **(7)** auf dem Werkstück,in der Nähe des mindestens einen Bandes **(8)** bzw. der vorgeformten Einlage bzw. der Folie **(2)** an der zu beschichtenden Werkstückoberfläche **(1)**, mindestens ein Drahtstück **(14)**, eine Leiste **(16)** oder ein Profil angebracht wird, womit eine formschlüssige Verbindung des Kunststoff**es (7)**, vorteilhaft Elastomer, mit der Werkstückoberfläche **(1)** hergestellt wird.

7. Verfahren **zur Herstellung einer Schicht zur Verminderung der Haftung** nach Anspruch **1,** dadurch gekennzeichnet, daß **die Schicht (8) zur Verminderung der Haftung aus** mindestens einem schlauchförmigen Hohlkörper **(2) besteht,** der mittels einer Schraub**rohr**verbindung **(22)**, die für das Medium **von der , der Beschichtung abgewandten Seite bzw.** vom Innenraum **(11)** hindurch zugänglich ist, auf das Werkstück **(1)** aufgebracht und zur **Wulstbildung dient, indem** der schlauchförmige Hohlkörper **(2)** mittels Vorrichtung **(10)** über diese **rohrförmige** Schraubverbindung **(22)** mit gas- oder flüssigförmigen Medien beaufschlagt wird und dort die **Beschichtung (7)** von der Werkstückoberfläche **(1)** abgehoben wird.

8. Werkstück, beispielsweise eine Walze, Druckkissen, Anpreßschuh, Heiz- Kühlmatte, geschmiertes Lagersegment mit einer mit Kunststoff-, insbesondere mit Elastomer druckgegossenen, aufgepreßten, aufgespritzten, mindestens einmal aufgebrachten, Beschichtung **(7),** dadurch gekennzeichnet, daß an der Werkstückoberfläche, mindestens eine örtlich begrenzte Schicht **(8)**, zur Verminderung der Haftung der Beschichtung, zur Bildung von Hohlräumen **(2)** aufgebracht ist, und diese Schicht oder Schichten mindestens an eine Vorrichtung **(3, 10)** angrenzt, die zur Zu- bzw. Ableitung von Medium mit variablem Druck dient und dieses zugeleitete Medium hierbei an **den Stellen** der örtlich begrenzten Schicht **(8)**, zur Verminderung der Haftung der Beschichtung **(7)**, zwischen Werkstückoberfläche und Innenfläche der Beschichtung, die Beschichtung **(7)** abhebt und die dadurch entstandenen Hohlräume rohrförmige Querschnitte bilden, die zur Durchflutung bzw. zum Durchfluß des Mediums zur Versorgung von Kammern, und zur vom Mediumdruck abhängigen **Wulstbildung,** und zur Versorgung mittels Druckweiterleitung des Durchflußmediums, an die mit der Oberfläche verbundenen Austrittsöffnungen **(28)**, dienen.

9. Werkstück **(1)** nach Anspruch 8 dadurch gekennzeichnet, daß die Form der Schicht **(2)** zur Verminderung der Haftung in mindestens zwei Zonen geteilt ist und jede daraus gebildete Hohlraum - bzw. Kammerzone über eine zugeordnete Zuführ- bzw. Ableitungs - Vorrichtung **(3,18,21,10)**, gegebenenfalls voneinander unabhängig, Medium, insbesondere mit variablem Druck, zugeführt bzw. abgeleitet wird.

10. Werkstück **(1)** nach Anspruch 8 und 9, dadurch gekennzeichnet, daß die Form der Schicht **(2)** zur Verminderung der Haftung mindestens eine Zone aufweist, jede daraus gebildete Hohlraum- bzw. Kammerzone durch eine zugeordnete, zweckmäßig im Werkstück angeordnete Vorrichtung z.B. eine Bohrung **(10)** mit dem Innenraum **(11)** des Werkstückes verbunden und durch diese zugeordnete Vorrichtung **(3)** Medium insbesondere mit variablem Druck, voneinander unabhängig in den Innenraum zu- und ableitbar ist. FIG.**9, 10**

11. Werkstück **(1)** nach Anspruch 8 bis 10, dadurch gekennzeichnet, daß die Schicht **(2)** zur Verminderung der Haftung die Form zueinander paralleler Streifen aufweist.

12. Werkstück **(1) in der Form einer Walze** nach Anspruch 8 bis 10, dadurch gekennzeichnet, daß die Schicht **(2)** zur Verminderung der Haftung entlang einer ein-, zwei-, oder mehrgängigen **Schraublinie (2)** in der Form von Streifen am Walzenumfang **ausgebildet ist** und einen Steigungswinkel der **Schraublinie gegenüber der Umfangslinie** größer als 5 Grad aufweist.

13. Werkstück **(1)** nach Anspruch 8, bis 12, dadurch gekennzeichnet, daß in Abhängigkeit von der zugeführten bzw. durchgeleiteten Menge an Medium, in mindestens einen streifenförmigen Hohlraum **(2)**, der zweckmäßig mit dem Innenraum des Werkstückes verbunden ist, mindestens ein **Wulst** mit variabler Profilhöhe auf der Werkstückoberfläche, beispielsweise Mantelfläche einer Walze, ausgebildet wird.

14. Werkstück **(1)** nach Anspruch 8 bis 13, dadurch gekennzeichnet, daß das Werkstück als Walze ausgebildet ist und von außen an einer, vorteilhaft an beiden Stirnseiten in der Rotationsachse der Walze, zweckmäßig über ein an der bzw. jeder Stirnseite angeordnetes Drehteil **(3)** Medium, insbesondere mit variablem Druck, durch den Innenraum **(11)** der Walze und durch eine in der Rotationsachse der Walze angeordnete Bohrung **(18)** sowie mindestens einer im Innenraum der Walze, zweckmäßig vertikal zur Rotationsachse im Zapfen angeordneten Bohrung **(21)**, dem mindestens einen Hohlraum **(2)** bzw. der Kammer, gegebenenfalls jeder Hohlraum- bzw. Kammerzone zugeordneten, in der Walze angeordneten Kanal **(10)**, z.B. voneinander unabhängig dem mindestens einen Hohlraum bzw. Kammer, gegebenenfalls den Hohlraum- bzw. Kammerzonen zuführbar ist bzw. aus dem mindestens einen Hohlraum bzw. Kammer, gegebenenfalls aus den Hohlraum- bzw. Kammerzonen z.B. voneinander unabhängig nach außen ableitbar ist.

15. Werkstück **(1)** nach Anspruch 8 bis 14, dadurch gekennzeichnet, daß das Werkstück als Walze ausgebildet ist und der Innenraum **(11)** der Walze durch mindestens eine, vorteilhaft vertikal zur Rotationsachse der Walze angeordneten Trennwand **(19)** in mindestens zwei Innenräume geteilt ist, und von außen an den beiden Stirnseiten über einen jeweils in der Rotationsachse der Walze angeordneten Drehteil **(3)** gasförmiges Medium, insbesondere Luft, und bzw. oder flüssiges Medium, insbesondere mit variablem Druck, durch den Innenraum **(11)** der Walze und durch eine in der Rotationsachse der Walze angeordneten Bohrung **(18)** sowie durch mindestens ein im Innenraum der Walze zweckmäßig vertikal zur Rotationsachse angeordnetes Rohr **(21)**, dem mindestens ein Hohlraum bzw. eine Kammer **(2)**, gegebenenfalls jede Hohlraum- bzw. Kammerzone zugeordnet ist, voneinander unabhängig nach außen zu- und ableitbar ist.

16. Verfahren zur Herstellung der Schicht zur Verminderung der Haftung nach Anspruch 1, dadurch gekennzeichnet, daß das Band bzw. vorgeformte Einlage bzw. eine Folie **(25)** aus mindestens zwei Lagen besteht, die an den, die Schicht begrenzenden Rändern miteinander dicht verbunden, beispielsweise geschweißt, geklebt, oder gepreßt werden.

17. Mit Kunststoff-, insbesondere mit Elastomer beschichtetes Werkstück **(1)** nach Anspruch 8, mit mindestens zwei Schichten **(25)**, dadurch gekennzeichnet, daß durch die Form der Schicht zur Verminderung der Haftung der Beschichtung der ersten Lage und durch die zweckmäßige Versetzung der Form der Schicht zur Verminderung der Haftung der Beschichtung der nächsten Lage, sich die, kumulative **Wulstbildung** der Hohlräume beider Lagen als gleichmäßig auf die Oberfläche bezogenen Zuwachs der Gesamtbeschichtung ausbildet.

18. Mit Kunststoff-, insbesondere mit Elastomer beschichtetes Werkstück **(1)** nach Anspruch 8, mit mindestens einer Schicht **(23)**, dadurch gekennzeichnet, daß zwischen der Schicht zur Verminderung der Haftung und der Oberfläche der Werkstückbeschichtung, Öffnungen **(28)** beispielsweise Bohrungen angeordnet sind, die die Verbindung zwischen den Hohlkammern und der Oberfläche der Werkstückbeschichtung herstellen, durch die Medium an die Oberfläche der Werkstückbeschichtung herangeführt oder von dort abgesaugt wird.

19. Mit Kunststoff-, insbesondere mit Elastomer beschichtetes Werkstück **(26)** nach Anspruch 8, mit mindestens einer Schicht **(23),** dadurch gekennzeichnet, daß an der Oberfläche der Beschichtung **(23)** eine druckfeste biegesteife Platte **(32) im Werkstück (26) verschiebbar und durch Dichtleisten (24) die Elastomerschicht (23) umschließend** angebracht ist, die **bei Druckbeaufschlagung mittels Medium durch die Zuleitung (27) in die Hohlräume (25, 30) zur Volumsvergrößerung innerhalb der Hohlräume (25, 30) führt** bzw. **die** Verstellung der Platte (32) **gegenüber dem Werkstück (26)** bewirkt **und** unter **Last, die auf die Platte** (**32) wirkt und sich über das Elastomer (23) auf das aufliegende Werkstück überträgt. zur Abstützung der** Reaktionskräfte, **aber auch zur Anhebung der Platte und** zur Weiterleitung der Druckkräfte dient.

## Claims

1. Procedure of manufacturing a plastic object, in particular an elastomer injection-molded, pressed, sprayed coating(7) of an object(1), as there are rolls, pressure pads, press shoe, heating or cooling mat, lubricated bearing segment, subsequently called **object** (1), comprising
a plastic, particulary an elastomeric layer (7), by application of a method for reducing or preventing binding or adhesion, subsequently called **layer (8) of reduced adhesion**,
wherein at local limited areas the coating is applied without binding to the object (1), wherein this step is processed at least once, wherein said local limited areas create cavities (2) for floating with gas or liquid medium to supply subsurface hollow space between the surface of the object (1) and the inner side of the layer (7) by a connection device (10) for creating lift-off from the surface to achieve profiled elevation.

2. Procedure of manufacturing the layer of reduced adhesion according to claim 1, comprising the insertion of at least one strip (8) or preformed insert or film, paint or coating to the object, wherein the said insert (8) is suitably stuck or fixed partially at the border (13) to the surface of the object, wherein locally limited the surface of the object is smooth finished; to achieve reduced adhesion of coating to the object.

3. Procedure to manufacture the layer of reduced adhesion according to claim 1, comprising an application of at least one film, preformed insert, paint or coating (8),consisting of electrical conductiv material, to the object (1) and wherein after the subsequent coating (7) the adhesion is reduced through heating by electrical resistance.

4. Procedure to manufacture the layer of reduced adhesion according to claim 1, comprising an application of at least one film, preformed insert, paint or coating (8),consisting of chemical soluble material, to the object (1) and wherein after the subsequent coating (7) the adhesion is reduced through by washing out or electrolytic solvent.

5. Procedure according to claim 1 to 4, comprising the insertion of a strip (8) or preformed insert to the coating to the object (1), wherein the said stuck selfadhesive insert (8) is suitable partially bent at the border (13) by means of which the insert (8) at the border (13) is without contact to the surface of the object (1), wherein, after the subsequent coating (7) of the object (1), the coating reaches the surface of the object even underneath the partially loose insert (8).

6. Procedure according to claim 1 to 5, comprising the improvement of adhesion of the coating (7) to the object (1) near the at least one band (8) or preformed insert or film, wherein at least one piece of (14) wire a bar (16) or a sectional steel is fixed to the object (1), forming a surrounding connection of the plastic (7) suitable an elastomer, with the object (1).

7. Procedure to manufacture a layer of reduced adhesion according to claim 1, comprising the said layer consists of at least one tubular hose (2). wherein the said hose is connected to a tubular fitting(22), reachable for medium, fed from the side of the cavity (11) opposite to the coating (7), fixed to the object (1), functionally to achieve profiled elevation by feeding gas or liquid medium from the connection device (10) through the fitting (22) to the tubular hose (2) creating lift-off of the coating (7) from the object (1).

8. Object (1) with an elastomer injection-molded, pressed, sprayed coating (7), as there are rolls, pressure pads, press shoe, heating or cooling mat, lubricated bearing segment, comprising at least one layer (8) of local limited areas to reduce adhesion to the coating (7) and wherein said coating is applied without binding to the object (1) functionally to achieve cavities (2) and wherein at least one of said layers (8) is in touch with a connection device (10) for floating with gas or liquid medium suitable with variable pressure and wherein this medium creates lift-off of the coating (7) at the said local limited areas from the object (1), to form tubular cavities, for medium flow or floating of said cavities to achieve profiled elevation, depending on the applied pressure and to supply medium to the surface through the openings (28) according to to the medium pressure.

9. Object (1) according to claim 8, comprising a layer of reduced adhesion (2), wherein said layer forms two seperated areas, and each forming a cavity, each are connected to a feed or draining device (3), wherein medium is fed, suitable independently by variable pressure.

10. Object (1) according to claim 8 and 9, comprising a layer of reduced adhesion(2) wherein said layer forms at least two areas and each forming a cavity, each is connected to a feed or draining device (3) which is connected for example by a boring (10) to the interior (11) of the cylinder (1) for feed or drainage of medium is fed, suitable independently by variable pressure.

11. Object (1) according to claim 8 to 10, comprising a layer of reduced adhesion (2), forming areas of two parallel stripes.

12. Object (1) in form of a roll, according to claim 8 to 10, comprising a layer of reduced adhesion (2), forming a single, double or multiple thread, forming stripes surrounding the roll wherein the angle of thread and circumference is more than 5 degrees.

13. Object (1) according to claim 8 to 12, comprising at least one cavity in form of stripes, suitable connected to the interior (11) of the cylinder forming a surface of profiled elevation of variable height, partricularly the surface of a roll.

14. Object (1) in form of a cylinder, according to claim 8 to 13, comprising a rotating valve (3) wherein said valves suitable on both ends of the journals and axial boring connected to at least one chamber of the interior of the cylinder and suitably connected to a vertical to the axis positioned boring (21) each are connected to the cavity formed by the areas of reduced adhesion (2) to form a duct (10) independently connected to at least one cavity for feed and drainage to the outside of the system.

15. Object(1) in form of a cylinder, according to claim 8 to 14, comprising a interior of the cylinder, wherein the said interior forms at least one compartment connected by borings through the cylindrical shell to the cavities, suitably separated by a wall vertical to the axis (19), wherein said compartments are connected to the axial boring of the journals connected to a rotable valve for feed and drainage of gas or fluid medium suitable with variable pressure, or connected to the said borings of the cylindrical shell by pipes, suitable in axial position connected to the journals and connected to a vertically positioned pipe to the said borings.

16. Procedure to manufacture a layer of reduced adhesion (2) according to claim 1, comprising a band or preformed insert or film, wherein said film consists of at least two layers bound together near the borders, in particular glued welded or pressed to an impermeable hollow body.

17. Object (1) coated by plastic in particular by elastomer (2), according to claim 8, comprising at least two layers (25), wherein the shape of the layers of reduced adhesion of the lower layer and the suitable shape of the layers of reduced adhesion of the upper layer forms a homogenous elevation of the surface of the cylinder by adding the profiled elevation of the cavities of the lower and upper layer.

18. Object (1) coated by plastic in particular by elastomer (2), according to claim 8, comprising at least one layer (23), wherein said layer of reduced adhesion (2) forms a system of cavities connected to the outer surface of the coating in particular by borings (28), to feed medium to the surface of the object or to drain from there.

19. Object (26) coated by plastic in particular by elastomer (2), according to claim 8, comprising at least one layer (23) of reduced adhesion, wherein said coating is topped by a stable and rigid plate (32), which can be shifted within the said object (26) wherein sealings (24) surrounding the elastomeric coating (23) forming and a feeding device (27) to feed medium to the cavities for increase of volume within the cavities (25,30) to achieve positioning of the plate (32) relatively to the object (26) under heavy load, and reaction of forces through the elastomer und the topped plate to have lift-off of the plate for lifting workpieces or induction of forces.

## Revendications

1. Méthode de production d'un objet (1), par exemple un rouleau, un coussin de pression, un sabot à presser, une natte à échauffer ou à réfrigérant, un segment de palier lubrifié, avec une enveloppe (7) moulée sous pression, engagé par pression et appliqué au pistolet avec des matières synthétiques, en particulier élastomères, caractérisée en ce que la couche synthétique, en particulier élastomère est produite limitée localement par l'emploi d'un moyen pour la réduction ou la neutralisation de la formation d'adhésion - dans la suite nommé couche à la réduction de l'adhésion - sans être reliée à la surface (12) de l'objet (1), en quoi cette démarche pour la configuration d'une enveloppe (7) synthétique est faite au moins une fois et qui est pour développer des creux (2) , attaché sous pression avec des milieux gazéiformes ou liquides entre la surface (12) de l'objet (1) et l'intérieur (11) de l'enveloppe (7) à l'aide d'un mécanisme d'amenée (3) de la surface (12) de l'objet (1) pour la formation d'un boudin.

2. Méthode de production d'une couche à la réduction de l'adhésion suivant la revendication No. 1, caractérisée en ce que, avant l'enveloppe (7) ment, au moins une bande ou une insertion (8) préformée ou une feuille, un enduit ou une couche de vernis attachée à l'objet (1), ou qu'une bande ou une insertion (8) ou une feuille préformeé sont collés appropriément ou attachés en partie, surtout aux bords (13), ou que la surface (12) de l'objet (1) est polie limitée localement pour réduire l'adhésion de l'enveloppe (7) synthétique.

3. Méthode de production d'une couche à la réduction de l'adhésion suivant la revendication No. 1, caractérisée en ce que, avant l'enveloppe (7) ment, au moins une bande ou une insertion (8) préformée ou une feuille, un enduit ou une couche de vernis fait d'une matière conductible est attaché à l'objet (1) et que, après l'enveloppe (7) ment, l'adhésion est réduite par l'échauffage de la résistance à l'aide du courant électrique.

4. Méthode de production d'une couche à la réduction de l'adhésion suivant la revendication No. 1, caractérisée en ce que, avant l'enveloppe (7) ment, au moins une bande ou une insertion (8) préformée ou une feuille, un enduit ou une couche de vernis fait d'une matière chimiquement soluble est attachée à l'objet (1) et que, après l'enveloppe (7) ment, l'adhésion est neutralisée par lixiviation ou dissolution électrolytique.

5. Méthode suivant une des revendications No. 1-4, caractérisée en ce que la bande autocollante ou la feuille attachée à l'objet (1) est courbée aux zones marginales, en quoi les bords (13) de la feuille ne sont pas couchés à la surface (12) de l'objet (1) et qu'ensuite la couche synthétique est attachée à l'objet (1), et aussi au-dessous des bords (13) pas touchants de la feuille, à la surface (12) de l'objet (1).

6. Méthode suivant une des revendications No. 1-5, caractérisée en ce que pour l'amélioration de l'adhésion de l'enveloppe (7) synthétique sur l'objet (1), au moins un morceau de fil, un liteau ou un profil est attaché à la surface (12) de l'objet (1) qui doit être enveloppé, près de la bande ou l'insertion (8) préformée ou la feuille, produisant ainsi un assemblage crabole de la substance synthétique, de préférence élastomère, avec la surface (12) de l'objet (1).

7. Méthode de production d'une couche à la réduction de l'adhésion suivant la revendication No. 1, caractérisée en ce que la couche à la réduction de l'adhésion se compose d'au moins un creux (2) tubulaire accessible pour le milieu par le coté opposé à l'enveloppe (7) ou l'intérieur (11) à l'aide d'un vissage cylindrique (22), qu'elle est attachée à l'objet (1) et sert à la formation des boudins en quoi le creux (2) tubulaire est attaché sous pression au-dessus de ce vissage cylindrique (22) à l'aide d'un dispositif, par des milieux gazéiformes ou liquides et que la couche y est enlevée de la surface (12) de l'objet (1).

8. Objet (1), par exemple un rouleau, un coussin de pression, un sabot à presser, une natte à échauffer ou à réfrigérant, un segment de palier lubrifié, avec une enveloppe (7) moulée sous pression, engagée par pression et appliquée au pistolet avec des matières élastiques, en particulier élastomères, caractérisé en ce qu'à la surface (12) de l'objet (1), au moins une couche avec adhésion locale limitée à la réduction de adhésion de l'enveloppe (7) est attachée au développement des creux (2), et que cette couche ou ces couches avoisinent au moins un mécanisme qui sert à l'amenée ou la dérivation d'un milieu enlève ainsi l'enveloppe (7) entre la surface (12) de l'objet (1) et la surface (12) intérieur (11) e de la couche aux zones de la couche avec adhésion locale limitée, pour réduire l'adhésion de l'enveloppe (7) et que les creux (2) ainsi formés développent des transversales cylindriques, qui servent au coulement et à la circulation du milieu pour l'approvisionnement de chambres, et à la formation des boudins, dépendante de la pression du milieu de circulation à l'aide d'une transmission de la pression, aux conduits d'échappement (28) reliés à la surface (12) .

9. Objet (1), suivant la revendication 8, caractérisé en ce que la forme de la couche à la réduction d'adhésion est partagé en au moins deux zones et que chaque zone des creux (2) ou des chambres ainsi developpée dispose d'un mécanisme d'amenée (3) ou de dérivation, le cas échéant indépendante l'un de l'autre, par lequel le milieu, surtout de pression variable, peut être amené ou dérivé.

10. Objet (1), suivant les revendications 8 et 9, caractérisé en ce que la forme de la couche à la réduction d' adhésion dispose d'au moins une zone, que chaque zone des creux (2) ou des chambres ainsi développé est reliée avec l'intérieur (11) de l'objet (1), par exemple un forage (10), et que le milieu, surtout de pression variable, peut être amenée ou dérivé indépendamment par ce mécanisme arrangé dans ou de l'intérieur (11) .

11. Objet (1), suivant revendications 8-10, caractérisé en ce que la couche à la réduction d'adhésion a la forme des raies parallèles l'une à l'autre.

12. Objet (1), sous forme d'un rouleau, suivant les revendications 8 - 10, caractérisé en ce que la couche à la réduction d'adhésion est développée sous forme de raies au périmètre du rouleau le long d'une ligne de vissage avec un ou deux chemins ou plus et dont l'angle d'inclinaison entre la ligne de vissage et la ligne du périmètre mésure plus que 5 degrés.

13. Objet (1), suivant les revendications 8-12, caractérisé en ce qu'au moins un boudin est développé dont le profil se trouve à un hauteur variable de la surface (12) de l'objet (1), et que ce développement de boudin est dépendant de la quantité amenée ou passante d'un milieu, et que ce développement se passe dans au moins un creux (2) sous forme des raies, qui est pratiquement relié à l'intérieur (11) de l'objet (1), par exemple la surface (12) latérale d'un rouleau.

14. Objet (1) suivant les revendications 8 - 13, caracterisé en ce que l'objet (1) a la forme d'un rouleau et que le milieu, surtout de pression variable, peut etre amené de l'exterieur le long d'un Conduit de rotation (3) arrangé aux deux cotés dans l'axe de révolution du rouleau et aussi au moins un forage arrangé dans l'intérieur (11) du rouleau, appropriément verticale à l'axe de révolution, auquel au moins un creux (2) ou une chamvre, le cas échéant chaque zone des creux (2) ou des chambres dans un canal arrangé dans le rouleau peuvent etre amenés ou derivés.

15. Objet (1), suivant les revendications 8-14, caractérisé en ce que l'objet (1) a la forme d'un rouleau et que l'intérieur (11) du rouleau est partagé par au moins une paroi (19) arrangé de préférence verticalement à l'axe de révolution en au moins deux espaces intérieur (11) s, et qui peut amener de l'extérieur aux deux fronts sur un Conduit de rotation (3) arrangé dans l'axe de révolution du rouleau un milieu gazéiforme, surtout de l'air, et/ou un milieu liquide, surtout de pression variable à travers un forage arranger dans l'axe de révolution et aussi à travers au moins un tube (21) arrangé dans l'intérieur (11) du rouleau appropriément verticalement à l'axe de révolution et à lequel est attribué au moins un creux (2) ou une chambre, le cas échéant chaque zone des creux (2) ou des chambres, et que ces amenées ou dérivations sont indépendantes l'une de l'autre.

16. Méthode de production d'une couche à la réduction de adhésion suivant la revendication No. 1, caractérisé en ce que la bande ou l'insertion (8) préformée ou la feuille se composent d'au moins deux couches reliés densement - par exemples soudés, collés ou pressés - aux bords (13) qui limitent l'enveloppe (7).

17. Objet (1), suivant la revendication 8, enveloppé avec des matières synthétiques, en particulier élastomères, avec au moins deux couches (25), caractérisé en ce que par la forme de la couche à la réduction d'adhésion de l'enveloppe (7) de la première couche et par le déplacement approprié de la forme de la couche à la réduction d'adhésion de l'enveloppe (7) de la couche suivante la formation des boudins dans le creux (2) des deux couches se développe comme une augmentation régulière de la couche entière à la surface (12).

18. Objet (1) suivant la revendication 8, enveloppé des matières synthétiques, en particulier élastomères, avec au moins une couche (23), caractérisé en ce qu'entre la couche à la réduction de l'adhésion et la surface (12) de l'enveloppe (7) de l'objet (1) il y a des conduits, par exemple des forages, qui établissent l'assemblage entre les creux (2) et la surface (12) de l'enveloppe (7) de l'objet (1), par lesquels le milieu est conduit à la surface (12) de l'enveloppe (7) de l'objet (1) ou d'ou il est aspiré.

19. Objet (26), suivant la revendication 8, enveloppé par des matières synthétiques, en particulier élastomères, avec au moins une couche (23), caractérisé en ce qu'une plaque inflexible (32) et résistante à la pression, déplacable dans l'objet (1) et entourant l'élastomère par des lisières (24) d'étoupage est attaché à la surface (12) de l'enveloppe (7), qui conduit à l'augmentation du volume à l'intérieur (11) des creux (2) pendant la fixation sous pression avec des milieux à travers les amenées dans les creux (2) ou qui cause un déplacement de la plaque (32) vis-à-vis l'objet (1) et qui, chargée, agit sur la plaque (32) et se transforme vers élastomère (23) sur l'objet (1) touchant, pour l'appui des forces de réaction, mais aussi pour l'enlèvement de la plaque et la transmission des forces de pression.
